# EUROPEAN PATENT SPECIFICATION

(11) **EP 1 201 966 B1**
(45) Date of publication and mention of the grant of the patent: **02.10.2002**
(21) Application number: 00830688.8
(22) Date of filing: 23.10.2000
(51) Int. Cl.: F16H 15/52

(54) **Mechanical variable-speed drive**
Mechanisches Getriebe mit variabler Übersetzung
Transmission mécanique à rapport variable

(43) Date of publication of application: 02.05.2002
(73) Proprietor: Bonfiglioli Riduttori S.p.A., 40012 Calderara di Reno (IT)
(72) Inventor: Montaguti, Paolo, 41058 Vignola (IT); Olivieri, Sergio, 41056 Savignano Sul Panaro (IT)
(74) Representative: Eccetto, Mauro

(56) References cited:
- EP-A- 0 311 734
- EP-A- 0 459 234
- GB-A- 918 085
- GROLL, F.: "Verbessertes Reibradgetriebe als Planetengetriebe" WERKSTATT UND BETRIEB, vol. 100, 1967, page 33 XP002162587

## Description

The present invention relates to a mechanical variable-speed drive.

More specifically, the present invention relates to a mechanical variable-speed drive of the type known from EP-A-0 311 734 which shows all features of the preamble of claim 1, shown in Figure 1 and comprising an epicyclic gear A interposed between an input shaft B and an output shaft C mounted to rotate about a given longitudinal first axis D at a first and second angular velocity respectively.

Epicyclic gear A comprises a sun gear E connected in angularly-fixed manner to input shaft B; a planet carrier F connected in angularly-fixed manner to output shaft C; an outer ring gear G substantially coaxial with first axis D; and a number of planet gears H, each having a respective longitudinal second axis I substantially parallel to first axis D. Planet gears H are connected frictionally to sun gear E and ring gear G to rotate about respective second axes I and simultaneously about first axis D, so as to rotate planet carrier F, and hence output shaft C, about first axis D.

Ring gear G normally comprises an angularly- and axially-fixed first ring L; and a second ring M movable to and from first ring L to control the radial position of second axes I with respect to first axis D and vary the velocity ratio of input shaft B and output shaft C.

The variable-speed drive also comprises an angularly- and axially-fixed third ring N on the opposite side of second ring M with respect to first ring L; and connecting means for connecting second ring M to third ring N, and which enable second ring M to move along first axis D as it rotates about first axis D.

The connecting means normally comprise an annular member O interposed between second and third ring M, N and supporting for rotation a number of balls P, which are distributed about first axis D and simultaneously engage two annular tracks of two cams Q, formed on second and third ring M, N respectively, so as to move second ring M axially as it rotates about first axis D.

The connecting means are therefore relatively complex and expensive by comprising cams Q and annular member O supporting balls P, and on account of the difficulty in both forming cams Q on respective rings M, N, and assembling annular member O, i.e. positioning balls P between cams Q.

It is an object of the present invention to provide a variable-speed drive designed to eliminate the aforementioned drawbacks.

According to the present invention, there is provided a variable-speed drive as claimed in Claim 1.

A non-limiting embodiment of the present invention will be described by way of example with reference to the accompanying drawings, in which:
Figure 2 shows a longitudinal section of a preferred embodiment of the mechanical variable-speed drive according to the present invention;
Figure 3 shows a view in perspective of a first detail of the Figure 2 variable-speed drive;
Figure 4 shows a view in perspective of a second detail of the Figure 2 variable-speed drive.

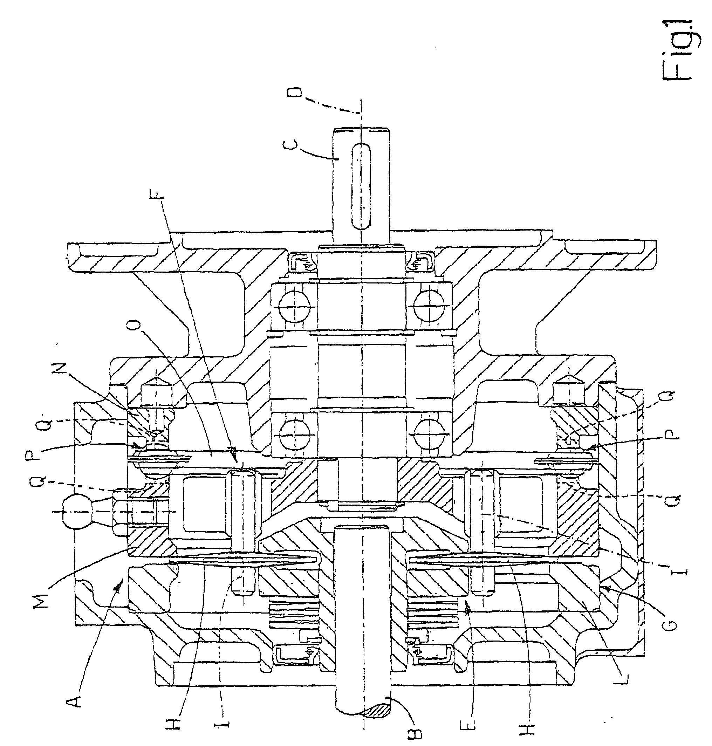

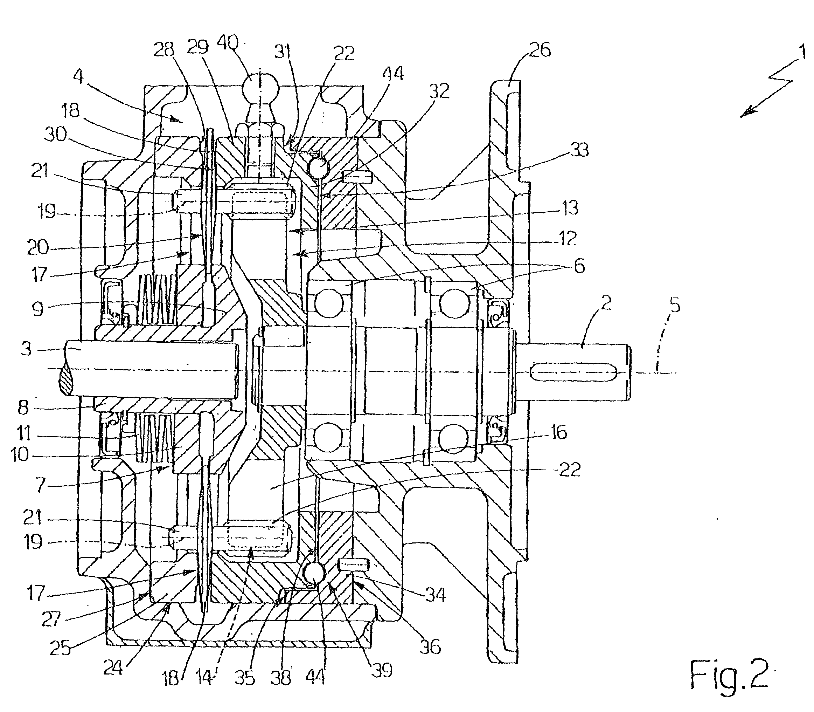

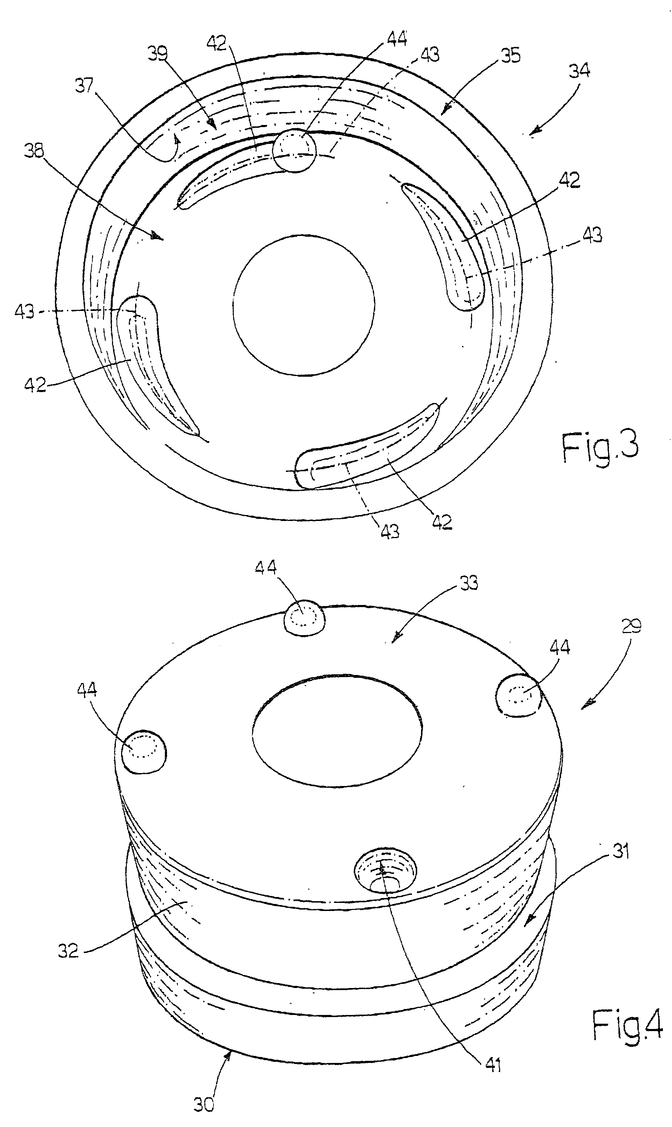

Number 1 in Figure 2 indicates as a whole a variable-speed drive for selectively varying the angular velocity of an output shaft 2 with respect to a constant angular velocity of an input shaft 3 by means of an epicyclic gear 4 interposed between shafts 2 and 3.

Shaft 3 has a longitudinal axis 5 and is rotated about axis 5 by a known actuating device not shown; and shaft 2 is positioned substantially facing and coaxial with shaft 3, and is rotated about axis 5 by gear 4 and via the interposition of two ball bearings 6.

Gear 4 comprises a sun gear 7 in turn comprising a tubular body 8, which is connected in angularly- and axially-fixed manner to shaft 3 and has, at one end, an annular flange 9 extending radially outwards from the outer surface of body 8. Sun gear 7 also comprises an annular plate 10, which is connected in axially-sliding manner to body 8 and is normally kept pressed against flange 9 by a spring 11 fitted to body 8 and coaxial with axis 5.

Gear 4 also comprises a planet carrier 12 in turn comprising a disk 13, which is connected in angularly- and axially-fixed manner to shaft 2, has a substantially cylindrical outer surface 14, and comprises a number of grooves 16 (four in the example shown) equally spaced about axis 5 and extending radially inwards from surface 14.

Gear 4 also comprises a number of planet gears 17 equal in number to grooves 16 and each comprising a respective disk 18, which has a longitudinal axis 19 substantially parallel to axis 5, is defined axially by two substantially truncated-cone-shaped surfaces 20, and is fitted to a pin 21 coaxial with axis 19.

Pin 21 is fitted in rotary and axially-fixed manner inside a bush 22, which is substantially parallelepiped-shaped so as to engage in sliding manner a respective groove 16.

Finally, gear 4 comprises an outer ring gear 24 in turn comprising a ring 25, which is coaxial with axis 5, is connected in angularly- and axially-fixed manner to a tubular outer casing 26 of variable-speed drive 1, and is defined axially by two surfaces 27 and 28 substantially parallel to each other and crosswise to axis 5.

Ring gear 24 also comprises a ring 29 coaxial with axis 5 and defined axially by two surfaces 30 and 31 substantially parallel to each other and to surfaces 27 and 28. Surface 30 faces surfaces 28 and has a cylindrical tubular shank 32, which projects laterally from surface 31, is coaxial with axis 5, and is defined axially by a surface 33 substantially parallel to surface 31.

Variable-speed drive 1 also comprises a ring 34, which is located on the opposite side of ring 29 with respect to ring 25, is coaxial with axis 5, is connected in axially- and angularly-fixed manner to casing 26, and is defined axially by two surfaces 35 and 36 substantially parallel to each other and to surfaces 30 and 31, and of which surface 35 faces surface 31. Ring 34 also comprises a substantially cylindrical cavity 37 (Figure 3), which opens outwards at surface 35, is defined by a bottom surface 38 substantially parallel to surface 35, and is engaged in rotary and axially-sliding manner by shank 32.

In a variation not shown, ring 34 is formed in one piece with casing 26.

Rings 29 and 34 are connected to each other by a connecting device 39, so that ring 29 moves axially to and from ring 25 when ring 29 is rotated by a control pawl 40 projecting radially outwards from the lateral surface of ring 29.

With reference to Figures 3 and 4, device 39 comprises a number of substantially hemispherical seats 41 (four in the example shown) opening outwards at surface 33 of shank 32 and equally spaced about axis 5; and a number of guide channels 42, which are equal in number to seats 41, are equally spaced about axis 5, and open outwards at surface 38 of cavity 37.

Each channel 42 has a longitudinal axis 43 substantially crosswise to axis 5, has a substantially arc-shaped cross section, varies in height along respective axis 43, and extends about axis 5 by an angle of substantially less than 90°.

Device 39 also comprises a number of balls 44 equal in number to seats 41 and channels 42, and each of which engages a respective seat 41 and respective channel 42 so as to convert the rotation of ring 29 about axis 5 into axial displacement of ring 29 along axis 5.

In actual use, planet gears 17 are connected frictionally to both sun gear 7 and ring gear 24. More specifically, each planet gear 17 is gripped between flange 9 and plate 10 and between rings 25 and 29 so as to rotate about respective axis 19 and simultaneously about axis 5 and so rotate planet carrier 12 about axis 5.

The ratio between the angular velocities of shafts 2 and 3 is varied by adjusting the radial position of planet gears 17 with respect to sun gear 7, i.e. by adjusting the distance between axes 19 and axis 5. More specifically, when axes 19 of planet gears 17 are located a maximum distance (Figure 2) from axis 5, the angular velocity of planet carrier 12, and therefore of shaft 2, is minimum. Conversely, when axes 19 of planet gears 17 are located a minimum distance (not shown) from axis 5, the angular velocity of planet carrier 12, and therefore of shaft 2, is maximum.

The radial position of planet gears 17 with respect to sun gear 7 is varied by means of pawl 40 and connecting device 39, so that:
when ring 29 is moved towards ring 25, the grip exerted by rings 25 and 29 on truncated-cone-shaped surfaces 20 moves planet gears 17 radially towards axis 5 in opposition to spring 11; and
when ring 29 is moved away from ring 25, the grip exerted on truncated-cone-shaped surfaces 20 by plate 10 and flange 9 of sun gear 7, with the aid of spring 11, moves planet gears 17 radially towards outer ring gear 24.

Variable-speed drive 1 has several advantages, foremost of which is that hemispherical seats 41 and guide channels 42 are relatively cheap and easy to produce. Moreover, by virtue of each ball 44 engaging a respective substantially hemispherical seat 41 and a respective channel 42 with a substantially arc-shaped cross section, the contact pressures between each ball 44, respective seat 41 and respective channel 42 are relatively small, thus enabling balls 44, seats 41 and channels 42 to be made using materials which are relatively cheap and/or require no surface treatment.

## Claims

1. A mechanical variable-speed drive comprising an epicyclic gear (4) interposed between an input shaft (3) and an output shaft (2) mounted to rotate about a given longitudinal first axis (5) at a first and second angular velocity respectively, the epicyclic gear (4) comprising a sun gear (7) connected in angularly-fixed manner to said input shaft (3), a planet carrier (12) connected in angularly-fixed manner to said output shaft (2), a number of planet gears (17), each having a respective longitudinal second axis (19) substantially parallel to said first axis (5), and an outer ring gear (24) substantially coaxial with the first axis (5), said planet gears (17) being connected frictionally to said sun gear (7) and to said ring gear (24) to rotate about the respective said second axes (19) and about said first axis (5) so as to rotate said planet carrier (12) about the first axis (5), and said ring gear (24) comprising an angularly- and axially-fixed first ring (25), and a second ring (29) movable to and from said first ring (25) to control the radial position of said second axes (19) with respect to said first axis (5) and so vary the velocity ratio of said input shaft (3) and said output shaft (2); an angularly- and axially-fixed body (34) located on the opposite side of said second ring (29) with respect to said first ring (25); and connecting means (39) for connecting said second ring (29) to said body (34) and enabling the second ring (29) to move along said first axis (5) when the second ring (29) is rotated about the first axis (5); **characterized in that** said connecting means (39) comprise at least two substantially hemispherical seats (41) formed in one of said second ring (29) and said body (34); and, for each said seat (41), a guide channel (42) formed in the other of said second ring (29) and said body (34), and a ball (44) engaging a respective said seat (41) and a corresponding said guide channel (42); each said guide channel (42) having a longitudinal third axis (43) and varying in height along the respective third axis (43).

2. A variable-speed drive as claimed in Claim 1, wherein said seats (41) and said guide channels (42) are equally spaced about said first axis (5).

3. A variable-speed drive as claimed in Claim 1 or 2, wherein each said guide channel (42) has a substantially arc-shaped cross section.

4. A variable-speed drive as claimed in any one of the foregoing Claims, wherein said second ring (29) and said body (34) face each other at respective surfaces (33, 38) substantially crosswise to said first axis (5); said seats (41) and said guide channels (42) being formed in a first (33) and a second (38) of said surfaces (33, 38) respectively.

5. A variable-speed drive as claimed in Claim 4, werein said first (33) and said second (38) surface are surfaces of said second ring (29) and said body (34) respectively.

6. A variable-speed drive as claimed in any one of the foregoing Claims and comprising four said seats (41) equally spaced about said first axis (5); each said guide channel (42) extending about said first axis (5) by an angle of less than 90°.

7. A variable-speed drive as claimed in any one of the foregoing Claims and also comprising an outer tubular casing (26); said body (34) being formed in one piece with said casing (26).

8. A variable-speed drive as claimed in any one of Claims 1 to 6 and also comprising an outer tubular casing (26); said body (34) being connected in axially- and angularly-fixed manner to said casing (26).

## Patentansprüche

1. Mechanischer Antrieb mit veränderbarer Übersetzung, enthaltend ein epizyklisches Getriebe (4), das zwischen einer Eingangswelle (3) und einer Ausgangswelle (2) angeordnet ist, die um eine gegebene erste Längsachse (5) mit einer jeweiligen ersten und zweiten Winkelgeschwindigkeit drehbar angebracht sind, welches epizyklische Getriebe (4) enthält ein winkelmäßig starr mit der Eingangswelle (3) verbundenes Sonnenrad (7), einen winkelmäßig starr mit der Ausgangswelle (2) verbundenen Planetenträger (12), eine Anzahl von Planetenrädern (17), von denen jedes eine im wesentlichen zu der ersten Achse (5) parallele jeweilige zweite Längsachse (19) hat, und ein mit der ersten Achse (5) im wesentlichen koaxiales äußeres Ringrad (24), welche Planetenräder (17) reibungsmäßig mit dem Sonnenrad (7) und dem Ringrad (24) verbunden sind, so dass sie um die jeweiligen zweiten Achsen (19) und um die erste Achse (5) drehen, so dass der Planetenträger (12) um die erste Achse (5) dreht, und welches Ringrad (24) einen winkelmäßig und axial festen ersten Ring (25) und einen zweiten Ring (29) aufweist, der zu dem ersten Ring (25) hin und von ihm weg beweglich ist, um die radiale Position der zweiten Achsen (19) bezüglich der ersten Achse (5) zu steuern und auf diese Weise das Drehzahlverhältnis der Eingangswelle (3) zur Ausgangswelle (2) zu verändern; einen winkelmäßig und axial festgelegten Körper (34), der bezüglich des ersten Rings (25) an der entgegengesetzten Seite des zweiten Rings (29) angeordnet ist; und eine Verbindungsvorrichtung (39) zum Verbinden des zweiten Rings (29) mit dem Körper (34) und zum Ermöglichen, dass sich der zweiten Ring (29) längs der ersten Achse (5) bewegt, wenn der zweite Ring (29) um die erste Achse (5) dreht; **dadurch gekennzeichnet, dass** die Verbindungsvorrichtung (39) wenigstens zwei im wesentlichen halbkugelige Sitze (41) aufweist, die in einem vom zweiten Ring (29) und Körper (34) ausgebildet ist; und für jeden der Sitze (41) in dem anderen von zweitem Ring (29) und Körper (34) ein Führungskanal (42) ausgebildet ist, und eine Kugel (44) enthält, die in einen jeweiligen Sitz (41) und einen zugehörigen Führungskanal (42) eingreift, wobei jeder Führungskanal (42) eine dritte Längsachse (43) aufweist und längs der jeweiligen dritten Achse (43) sich in seiner Höhe verändert.

2. Antrieb mit veränderbarer Übersetzung nach Anspruch 1, wobei die Sitze (41) und die Führungskanäle (42) um die erste Achse (5) herum gleich beabstandet sind.

3. Antrieb mit veränderbarer Übersetzung nach Anspruch 1 oder 2, wobei jeder Führungskanal (42) einen im wesentlichen bogenförmigen Querschnitt aufweist,

4. Antrieb mit veränderbarer Übersetzung nach einem der vorhergehenden Ansprüche, wobei der zweite Ring (29) und der Körper (34) an jeweiligen Oberflächen (33, 34), die im wesentlichen quer zu der ersten Achse (5) verlaufen, einander zugewandt sind und die Sitze (41) und Führungskanäle (42) in einer ersten (33) und einer zweiten (38) der Oberflächen (33, 38) ausgebildet sind.

5. Antrieb mit veränderbarer Übersetzung nach Anspruch 4, wobei die erste (33) und zweite (38) Oberfläche Oberflächen des zweiten Rings (29) bzw. des Körpers (34) sind.

6. Antrieb mit veränderbarer Übersetzung nach einem der vorhergehenden Ansprüche und enthaltend vier solcher Sitze (41), die um die erste Achse (5) gleich beabstandet sind, wobei sich jeder Führungskanal (41) um die erste Achse (5) um einen Winkel von weniger als 90° erstreckt.

7. Antrieb mit veränderbarer Übersetzung nach einem der vorhergehenden Ansprüche und weiter enthaltend ein äußeres rohrförmiges Gehäuse (46), wobei der Körper (34) einteilig mit dem Gehäuse (36) ausgebildet ist.

8. Antrieb mit veränderbarer Übersetzung nach einem der vorhergehenden Ansprüche und weiter enthaltend ein äußeres rohrförmiges Gehäuse (26), wobei der Körper (34) axial und winkelmäßig starr mit dem Gehäuse (26) verbunden ist.

## Revendications

1. Transmission mécanique à rapport variable comprenant un engrenage épicycloïdal (4) interposé entre un arbre d'entrée (3) et un arbre de sortie (2) installés pour tourner autour d'un premier axe longitudinal donné (5) à des première et deuxième vitesses angulaires, respectivement, l'engrenage épicycloïdal (4) comprenant une roue solaire (7) reliée d'une manière angulairement fixe audit arbre d'entrée (3), un porte-planétaire (12) relié d'une manière angulairement fixe audit arbre de sortie (2), un nombre de roues planétaires (17), chacun ayant un second axe longitudinal respectif (19) sensiblement parallèle audit premier axe (5), et une couronne dentée externe (24) sensiblement coaxiale au premier axe (5), lesdites roues planétaires (17) étant reliées à friction à ladite roue solaire (7) et à ladite couronne dentée (24) pour tourner autour desdits seconds axes (19) respectifs et autour dudit premier axe (5) de façon à faire tourner ledit porte-planétaire (12) autour du premier axe (5), et ladite couronne dentée (24) comprenant une première couronne (25) fixée angulairement et axialement et une deuxième couronne (29) déplaçable vers et au loin de ladite première couronne (25) afin de commander la position radiale desdits seconds axes (19) relativement audit premier axe (5) et pour faire varier ainsi le rapport de vitesses dudit arbre d'entrée (3) et dudit arbre de sortie (2), un corps (34) fixé angulairement et axialement situé sur le côté opposé de ladite deuxième couronne (29) par rapport à ladite première couronne (25) ; et un moyen de connexion (39) pour connecter ladite deuxième couronne (29) audit corps (34) et pour permettre à la deuxième couronne (29) de se déplacer le long dudit premier axe (5) lorsque la deuxième couronne (29) est amenée à tourner autour du premier axe (5) ; **caractérisée en ce que** ledit moyen de connexion (39) comprend au moins deux sièges sensiblement hémisphériques (41) formés dans l'un parmi ladite seconde couronne (29) et ledit corps (34) ; et, pour chaque siège précité (41), un canal de guidage (42) ménagé dans l'autre parmi ladite seconde couronne (29) et ledit corps (34), et une bille (44) se logeant dans ledit siège respectif (41) et un canal de guidage correspondant précité (42) ; chaque canal de guidage précité (42) ayant un troisième axe longitudinal (43) et variant en hauteur le long du troisième axe respectif (43).

2. Transmission à rapport variable selon la revendication 1, où lesdits sièges (41) et lesdits canaux de guidage (42) sont espacés uniformément autour dudit premier axe (5).

3. Transmission à rapport variable selon la revendication 1 ou 2, où chaque canal de guidage précité (42) a une section transversale sensiblement en forme d'arc.

4. Transmission à rapport variable selon l'une des revendications précitées, où ladite deuxième couronne (29) et ledit corps (34) se font face à des surfaces respectives (33, 38) sensiblement transversalement audit premier axe (5) ; lesdits sièges (41) et lesdits canaux de guidage (42) étant formés dans une première (33) et une seconde (38) desdites surfaces (33, 38), respectivement.

5. Transmission à rapport variable selon la revendication 4, où ladite première (33) et ladite seconde (38) surfaces sont des surfaces de ladite seconde couronne (29) et dudit corps (34), respectivement.

6. Transmission à rapport variable selon l'une des revendications précédentes, et comprenant quatre sièges précités (41) espacés uniformément autour dudit premier axe (5) ; chaque canal de guidage précité (42) s'étendant autour dudit premier axe (5) selon un angle inférieur à 90°.

7. Transmission à rapport variable selon l'une des revendications précédentes, et comprenant également un boîtier tubulaire extérieur (26) ; ledit corps (34) étant réalisé en une pièce avec ledit boîtier (26).

8. Transmission à rapport variable selon l'une des revendications 1 à 6, et comprenant également un boîtier tubulaire externe (26) ; ledit corps (34) étant relié d'une manière axialement et angulairement fixe audit boîtier (26).
